# EUROPÄISCHE PATENTSCHRIFT

(11) **EP 1 664 969 B1**
(45) Veröffentlichungstag und Bekanntmachung des Hinweises auf die Patenterteilung: **23.05.2007**
(21) Anmeldenummer: 04786833.6
(22) Anmeldetag: 23.09.2004
(51) Int. Cl.: G05G 5/06, F16H 61/24

(54) **RASTIERVORRICHTUNG**
LOCKING DEVICE
DISPOSITIF DE BLOCAGE

(30) Priorität: 23.09.2003 DE 10344287
(43) Veröffentlichungstag der Anmeldung: 07.06.2006
(73) Patentinhaber: ZF FRIEDRICHSHAFEN AG, 88038 Friedrichshafen (DE)
(72) Erfinder: GIEFER, Andreas, 49448 Lemförde (DE); MEYER, Jörg, 49419 Wagenfeld (DE)
(86) Internationale Anmeldenummer: PCT/DE2004/002116
(87) Internationale Veröffentlichungsnummer: WO 2005/031491

(56) Entgegenhaltungen:
- EP-A2- 0 943 845
- WO-A1-02/061522
- DE-A1- 19 925 032
- JP-A- 4 034 262

## Beschreibung

Die Erfindung betrifft eine Rastiervorrichtung mit einer verstellbaren Halterung, in welche eine Ausnehmung für einen mit einer Federkraft beaufschlagten beweglichen Stift vorgesehen ist. Der Stiftkopf ragt aus der Ausnehmung heraus und steht mit einer Kontaktoberfläche an einer feststehenden Kontur in Kontakt.

Derartige Rastiervorrichtungen werden beispielsweise in Schaltvorrichtungen für die Betätigung von Getrieben in Kraftfahrzeugen verwendet, um die vom Fahrer mittels eines Schalthebels angewählten Schaltpositionen wiederzugeben. In den Schaltpositionen wird mittels einer Rastiervorrichtung der Schalthebel gegenüber einem Schaltgehäuse festgelegt und zeigt dem Fahrer an, dass eine gewünschte Schaltposition erreicht wurde. Auf Grund konstruktions- und fertigungsbedingter Toleranzen ergibt sich für die Aufnahme der beweglichen Teile der Rastiervorrichtungen, insbesondere für die Aufnahme eines Rastierstiftes, ein Spiel, welches zu einer ungenauen und unscharfen Wiedergabe der Schaltstellung durch den Schalthebel führt. Des Weiteren kann dieses Spiel zu einer ungewünschten Geräuschbildung während des Fahrbetriebes führen. Zur Vermeidung des Spieles zwischen dem Rastierstift und seiner Aufnahme werden Zentriervorrichtungen eingesetzt.

Eine derartige Zentriervorrichtung wird in der WO 02/061522 offenbart, wobei für die Zentrierung eine längliche Hülse verwendet wird, die den Stift für die Rastierung umgibt und mit der Halterung in Wirkverbindung steht. Stift und Hülse sind in einer Ausnehmung der Halterung angeordnet und stehen über eine Druckfeder miteinander in Verbindung. Die Hülse ist parallel zu ihrer Längsachse hin zum Stiftkopf geschlitzt und bildet auf diese Weise mehrere zungenartige und biegsame Abschnitte. Im Bereich der Öffnung der Ausnehmung besitzt die Hülse ferner eine konische Fläche, welche mit einer ebenfalls konischen Fläche an der Halterung in Kontakt steht. Der Kopf des Stiftes wirkt seinerseits mit der Oberfläche einer festen Kontur zusammen und rastet in Vertiefungen in der Oberfläche ein. Bei Kontakt des Stiftes mit der Oberfläche der feststehenden Kontur überträgt die Druckfeder eine in die Ausnehmung gerichtete Druckkraft auf die Hülse, wobei die Abschnitte der Hülse über die konischen Flächen in Richtung der Längsmittelachse gebogen werden. Die Abschnitte der Hülse drücken von mehreren auf den Stift und zentrieren ihn so auf die Längsmittelachse.

Besonders nachteilig an der Ausführungsform nach der WO 02/061522 sind die aufwendig gestalteten und einen großen Bauraum einnehmenden Bauteile. Insbesondere die verwendete Hülse erforderte einen verhältnismäßig großen Durchmesser der Ausnehmung in der Halterung sowie eine große Tiefe der Ausnehmung, da die Hülse um den Stift herum angeordnet ist und die einzelnen Abschnitte für die erforderliche Biegung eine gewisse Länge in axialer Richtung erfordern. Weiterhin erfolgt die Klemmung für die Zentrierung nicht notwendigerweise auf den ganzen Umfang des Stiftes, sondern nur punktuell und über eine relativ kleine Anpreßfläche, was im ungünstigen Fall zu vorzeitigen Abnutzungserscheinungen in Form von Druckstellen und Riefen am Stift führen kann. Bedingt durch die lediglich punktuelle Einwirkung der geschlitzten Abschnitte erfolgt die Zentrierung des Pins bei einer fehlerhaft gefertigten Hülse nicht unbedingt auf der Längsmittelachse der Ausnehmung. Weiterhin erfolgt die Zentrierung stets im Bereich der Öffnung der Ausnehmung, da sich hier die Hülse an der Halterung abstützt. Für eine einwandfreie Funktion der Zentriervorrichtung ist zudem erforderlich, die Hülse aus einem Kunststoff zu fertigen, damit die notwendige Biegung der Abschnitte einwandfrei gegeben ist. Somit ist die Auswahl aus den möglichen zu verwendenden Werkstoffen stark eingeschränkt.

Ein wesentlicher weiterer nachteiliger Aspekt der Ausführung nach der WO 02/061522 das mögliche Verquetschen der Hülse bei einer Schaltbetätigung oder im Mißbrauchsfall. Während der Schaltbetätigung wirken die Schaltkräfte auf den Stift senkrecht zu seiner Längsachse, wodurch insbesondere im Mißbrauchsfall die Schaltkräfte vollständig über die Hülse übertragen werden und die Gefahr der Beschädigung derselben besteht.

Aufgabe der Erfindung ist es demnach, eine Rastiervorrichtung mit einer Zentriervorrichtung zu schaffen, welche kompakt aufbaut, lediglich einen kleinen Bauraum beansprucht sowie einfach gestaltete Bauteile beinhaltet. Weiterhin soll die Zentriervorrichtung eine sichere und gleichmäßige Zentrierung mit einer gleichmäßigen Kraftverteilung gewährleisten.

Diese Aufgabe wird erfindungsgemäß von einer Rastiervorrichtung mit einer Zentriervorrichtung entsprechend der Merkmale der unabhängigen Ansprüche 1 und 2 gelöst. Weitere vorteilhafte Weiterbildungen der erfindungsgemäßen Vorrichtung ergeben sich aus den Merkmalen der Unteransprüche 3 bis 10.

Die erfindungsgemäße Rastiervorrichtung mit zumindest einer zwischen einem Stift und einer Halterung vorgesehenen Zentriervorrichtung zeichnet sich gemäß einer ersten Ausführung dadurch aus, dass die Zentriervorrichtung zumindest einen elastisch verformbaren Ring aufweist, wobei dieser vollständig innerhalb einer in einer Halterung vorgesehen Ausnehmung zwischen Stift und Halterung angeordnet ist. Der elastisch verformbare Ring ist innerhalb der Ausnehmung verschiebbar angeordnet und weist eine Oberfläche mit einem sich entgegen der Kraftrichtung einer axial auf den Stift wirkenden Druckfeder verjüngenden Querschnitt auf, welcher mit einer komplementären Oberfläche am Stift in Kontakt steht. Unter Einwirkung der axial wirkenden Federkraft gleitet die Oberfläche des elastisch verformbaren Ringes auf der komplementären Oberfläche des Stiftes ab und der Ring weitet sich auf. Dabei steht der Ring mit der Innenfläche der Ausnehmung in Kontakt und gleicht damit das Spiel zwischen Stift und Ausnehmung aus und zentriert den Stift auf die Längsachse der Ausnehmung.

Eine Zentriervorrichtung, welche ebenfalls zwischen Stift und Halterung angeordnet ist, für eine Rastiervorrichtung ist gemäß einer zweiten Ausführung mit zwei elastisch verformbaren Ringen, welche ebenfalls vollständig innerhalb der Ausnehmung zwischen Stift und Halterung angeordnet sind, ausgestattet. Beide Ringe weisen in Längsachsenrichtung der Ausnehmung eine sich verjüngende Oberfläche auf, über welche die beiden elastisch verformbaren Ringe miteinander in Kontakt stehen. Unter einer axial wirkenden Belastung, beispielweise einer Federkraft, gleiten die elastisch verformbaren Ringe über ihre sich verjüngenden Oberflächen, über welche sie miteinander in Kontakt stehen, ab. Einer der beiden Ringe wird zusammengedrückt, während sich der andere Ring aufweitet. Auf diese Weise wird das Spiel zwischen Stift und Halterung ausgeglichen und der Stift auf die Längsachse der Ausnehmung zentriert.

In einer bevorzugten Ausführungsform sind die elastisch verformbaren Ringe als geschlitzte Ringe, mit zumindest einem durchgehenden, axial oder schräg zur Längsachse der Ausnehmung angeordneten, den Ring vollständig oder teilweise durchtrennenden Schlitz, ausgeführt. Eine derartige Rastiervorrichtung mit einer Zentriervorrichtung zeichnet sich durch eine kompakte, wenig Bauraum einnehmende Ausführung aus. Insbesondere kann die radiale als auch die axiale Ausdehnung der Rastiervorrichtung auf ein Minimum beschränkt bleiben. So braucht der Durchmesser der Ausnehmung bei der ersten Ausführung nur geringfügig größer als der Durchmesser des Stiftes zu sein. Begünstigt wird die kompakte Bauform durch die einfache Gestaltung der elastisch verformbaren Ringe, insbesondere der geschlitzten Ringe, welche Standardbauteile darstellen, wodurch zusätzlich Kosteneinsparungen erzielt werden.

In einer besonders vorteilhaften Ausführung ist die sich verjüngende Oberfläche des oder der elastisch verformbaren Ringe konisch ausgebildet. Hierdurch ergibt sich besonders für radial ausgeführte Bauteile eine günstige Kraftverteilung, insbesondere wenn die beispielsweise durch eine eingesetzte Druckfeder erzeugte Federbelastung direkt am elastisch verformbaren Ring anliegt. Anderenendes stützt sich die Druckfeder an dem Stift oder an der Halterung ab. Über die konischen Oberflächen gleiten insbesondere die geschlitzten Ringe einfach ab und können sich entsprechend einfach aufweiten oder zusammenziehen. Die Belastung wird dabei vorteilhaft über eine große Fläche gleichmäßig abgestützt und übertragen, wodurch der Stift entlastet wird und die Gefahr eines vorzeitigen Verschleißes vermieden wird.

Für die erste Ausführung gilt zudem, das es während eines Schaltvorganges oder im Mißbrauchsfall zu keinem Verquetschen des elastisch verformbaren Ringes kommt, da dieser an den sich verjüngenden, idealerweise konischen Oberflächen abgleitet, bis der Außendurchmesser des Stiftes mit der Innenwandung der Ausnehmung in Kontakt steht. Da hier eine relativ große Fläche miteinander in Kontakt steht, werden Überbelastungen am Stift weitestgehend vermieden und am elastisch verformbaren Ring nahezu ausgeschlossen.

Die Verwendung von geschlitzten Ringen ermöglicht zudem eine relativ freie Werkstoffwahl für die Paarung von Stift, Halterung und elastisch verformbarem Ring. So kann insbesondere der geschlitzte Ring aus Kunststoff als auch beispielsweise aus einem Metallwerkstoff, beispielsweise einem Federstahl, oder eine sehr harten Kunststoff gefertigt sein. Der Stift als auch die Halterung werden aus Gründen einen geringen Gewichts vorteilhaft aus Kunststoff gefertigt sein, aber auch andere Materialien wie Metallwerkstoffe sind einsetzbar. Weiterhin ermöglicht der Einsatz von elastisch verformbaren Ringen eine freie Wahl des Ortes der Zentriervorrichtung innerhalb der Ausnehmung, so dass hier gewisse Variationsmöglichkeiten für zum Beispiel die optimale Bestimmung von Hebellängen bestehen.

Eine besonders günstige Zentrierwirkung ergibt sich, wenn an dem Stift zwei von einander beabstandete Zentriervorrichtungen eingesetzt werden, zwischen denen eine Druckfeder wirkt. Hierbei ist eine Zentriervorrichtung in der Nähe der Öffnung der Ausnehmung und die zweite Zentriervorrichtung im Innern der Ausnehmung angeordnet. In diesem Fall wird der Stift an zwei Positionen auf die Längsachse der Ausnehmung zentriert und spielfrei in der Ausnehmung gehalten. Beide Zentriervorrichtungen können entsprechend den oben angegebenen Ausführungen baugleich ausgeführt werden oder es werden unterschiedliche Ausführungen miteinander kombiniert.

Nachfolgend werden einige mögliche Ausführungsformen der erfindungsgemäßen Rastiervorrichtung anhand von Zeichnungen näher erläutert.
Es zeigen:
- Figur 1 :: eine Schaltvorrichtung für die Betätigung von Getrieben in Kraftfahrzeugen mit einem Schalthebel
- Figur 2:: einen Schalthebel gemäß Figur 1 mit einer erfindungsgemäßen Rastiervorrichtung
- Figur 3:: eine Detailansicht in Schnittdarstellung eines ersten Ausführungsbeispieles der erfindungsgemäßen Rastiervorrichtung
- Figur 4:: eine Detailansicht in dreidimensionaler Ansicht des ersten Ausführungsbeispieles gemäß Figur 3 der erfindungsgemäßen Rastiervorrichtung
- Figur 5:: eine Detailansicht in Schnittdarstellung eines zweiten Ausführungsbeispieles der erfindungsgemäßen Rastiervorrichtung
- Figur 6:: eine Detailansicht in dreidimensionaler Ansicht des zweiten Ausführungsbeispieles gemäß Figur 5 der erfindungsgemäßen Rastiervorrichtung
- Figur 7:: eine Detailansicht in Schnittdarstellung eines dritten Ausführungsbeispieles der erfindungsgemäßen Rastiervorrichtung
- Figur 8:: eine Detailansicht in dreidimensionaler Ansicht des dritten Ausführungsbeispieles gemäß Figur 7 der erfindungsgemäßen Rastiervorrichtung

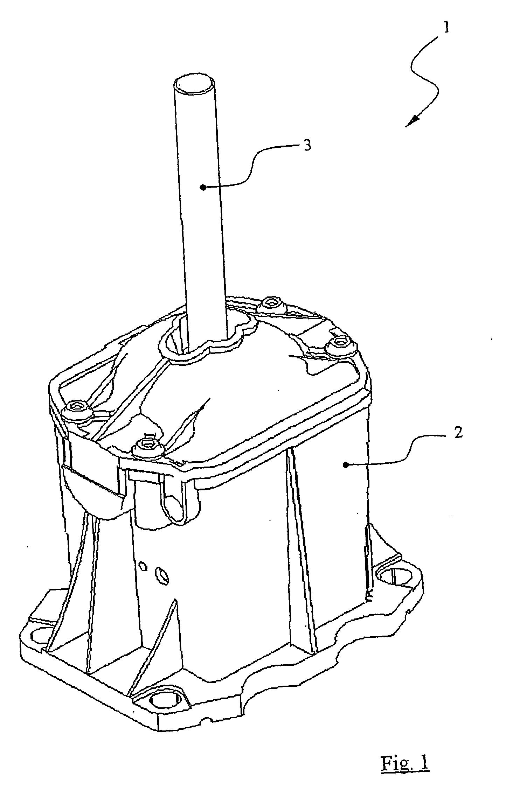

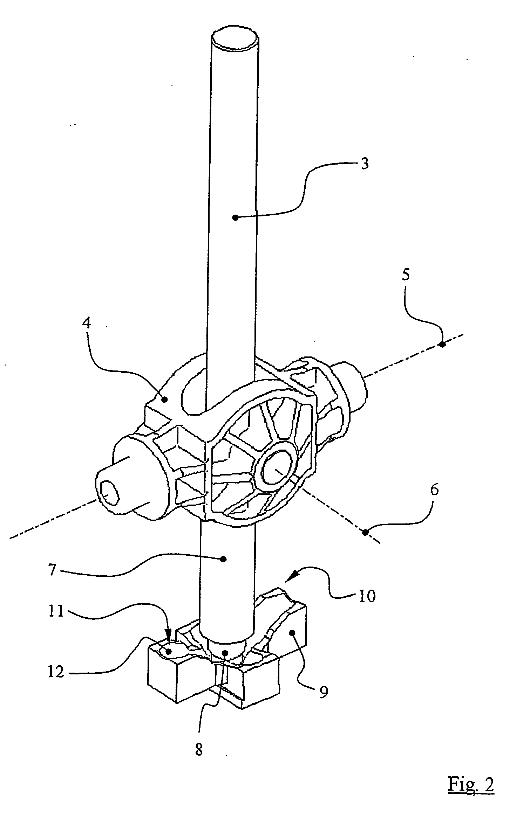

In den Figuren 1 und 2 ist ein beispielhafter Aufbau einer Schaltvorrichtung 1 für die Betätigung eines Getriebes in Kraftfahrzeugen gezeigt. In einem fest mit dem Fahrzeugaufbau verbundenen Schaltgehäuse 2 ist ein Schalthebel 3 mittels eines Schwenkgelenkes 4 um eine erste Schwenkachse 5 und eine zweite Schwenkachse 6 schwenkbar gelagert. Am unteren, im Schaltgehäuse 2 befindlichen Teil des Schalthebels 3 ist eine fest mit dem Schalthebel 3 verbundene Halterung 7, die hier einteilig mit dem Schalthebel 3 ausgeführt ist, vorgesehen, in welchem ein beweglichen Stift 8 angeordnet ist. Halterung 7 und Stift 8 bilden zusammen mit einer Kontur 9, welche fest mit dem Schaltgehäuse 2 verbunden ist, die Rastiervorrichtung 10. Die Kontur 9 weist dabei eine Führungsnut 11 mit einer Kontaktoberfläche 12, welche mit dem Stift 8 in Kontakt steht, auf

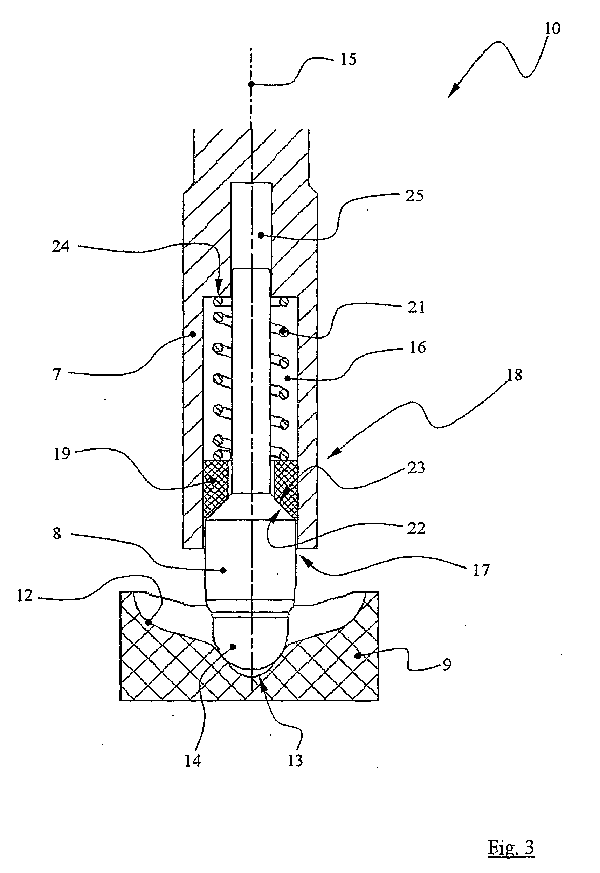

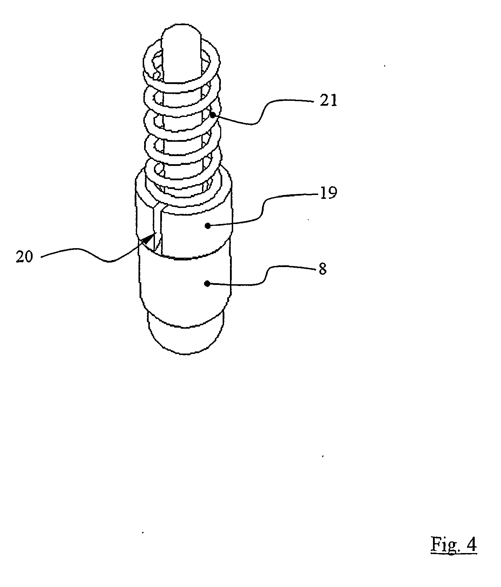

Ein erstes Ausführungsbeispiel der inneren Ausgestaltung der Rastiervorrichtung 10 ist in den Figuren 3 und 4 wiedergegeben. Die mit dem Stift 8 in Kontakt stehende Kontaktoberfläche 12 weist dabei eine Vertiefung 13 auf, in welcher der Stift 8 mit seinem Stiftkopf 14 in der gezeigten Position eingerastet ist. Der Stift 8 ist entlang einer Längsachse 15 der Ausnehmung 16 verschieblich angeordnet und rotationssymmetrisch ausgebildet. Innerhalb der Ausnehmung 16 ist in der Nähe der Öffnung 17 der Ausnehmung 16 eine Zentriervorrichtung 18 angeordnet. Hierzu ist zwischen dem Stift 8 und der Halterung 7 ein elastisch verformbarer Ring in der Ausgestaltung eines geschlitzten Ringes 19 vorgesehen. Der geschlitzte Ring 19 weist einen axial zur Längsachse 15 der Ausnehmung angeordneten Schlitz 20 auf, welcher den geschlitzten Ring vollständig durchtrennt. Zwischen dem geschlitzten Ring 19 und der Halterung 7 ist eine Druckfeder 21 angeordnet, welche den Stift 8 mit einer axialen Federkraft belastet. Hierzu weist der geschlitzte Ring eine sich entgegen der Kraftrichtung der Druckfeder verjüngende Oberfläche 22 auf, welche mit einer komplementären Flächen 23 am Stift 8 in Kontakt steht. Sowohl die sich verjüngende Oberfläche 22 als auch die komplementäre Fläche 23 am Stift 8 sind konisch ausgebildet. Die Druckfeder 21 stützt sich an der dem geschlitzten Ring 19 abgewandten Seite an einem Absatz 24 der Halterung 7 ab. Der Stift 8 ist im Inneren der Ausnehmung 16 in einem verjüngten Bereich 25 der Ausnehmung 16 geführt.

Bei Kontakt des Stiftkopfes 14 des Stiftes 8 mit der Kontaktoberfläche 12 der Kontur 9 ist die Druckfeder 21 stets zusammengedrückt und belastet den Stift 8 über den geschlitzten Ring 19 mit einer Kraft. Da sich diese Kraft über den geschlitzten Ring 19 abstützt, gleiten die konischen Flächen 22, 23 des geschlitzten Ringes 19 und des Stiftes 8 aufeinander und der geschlitzte Ring 19 weitet sich, bis er an der Innenwandung der Ausnehmung 16 anliegt. Über die konischen Flächen 22, 23 wird der Stift 8 anschließend auf die Längsachse 15 der Ausnehmung 16 zentriert. Die konischen Flächen 22, 23 ermöglichen dabei eine über den Umfang gleichmäßig radiale Kraftverteilung, so dass eine gleichmäßige und sichere Zentrierung auf die Längsmittelachse 15 der Ausnehmung 16 gewährleistet ist. Durch die verhältnismäßig großen Kraftübertragungsflächen der konischen Flächen 22, 23 wird zudem die Belastung des Stiftes 8 klein gehalten, um so Druckstellen oder vorzeitigen Verschleiß zu vermeiden. Diese Anordnung baut sehr kompakt und klein auf, insbesondere ist der Durchmesser der Ausnehmung 16 nur geringfügig größer als der Außendurchmesser des Stiftes 8. Während eines Schaltvorganges oder im Mißbrauchsfall, in denen der Stift 8 mit einer senkrecht zur Längsachse 15 wirkenden Kraft beaufschlagt wird, kann der geschlitzte Ring 19 in über die konischen Oberflächen 22, 23 in Längsachsenrichtung ausweichen, so dass der Stift 8 in Kontakt mit der Innenwandung der Ausnehmung 16 kommt und sich hier abstützt. Durch die relativ große für die Kraftübertragung zur Verfügung stehende Fläche wird eine Beschädigung des Stiftes vermieden. Ein Verquetschen des geschlitzten Ringes 19 ist ausgeschlossen, da der geschlitzte Ring, wie beschrieben, ausweicht. Da zwischen Stift 8 und geschlitztem Ring 19 nur geringfügige Relativbewegungen auftreten, kann auch die Materialpaarung vom Stift 8 zum geschlitztem Ring 19 relativ frei gewählt werden, wodurch zusätzliche konstruktive Gestaltungsmöglichkeiten geschaffen werden. Ferner können standardisierte Bauteile verwendet werden, so dass neben einem verringerten Konstruktionsaufwand zusätzlich Kosteneinsparungen erzielt werden können.

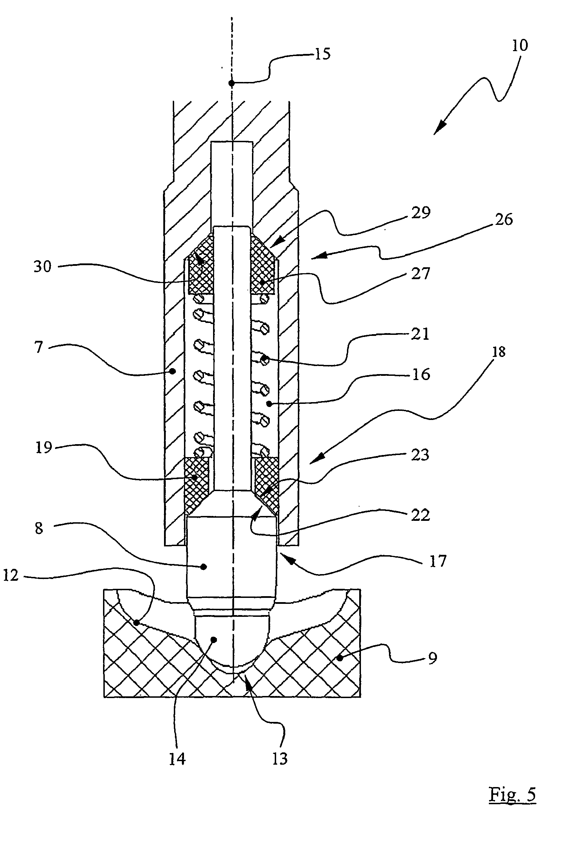

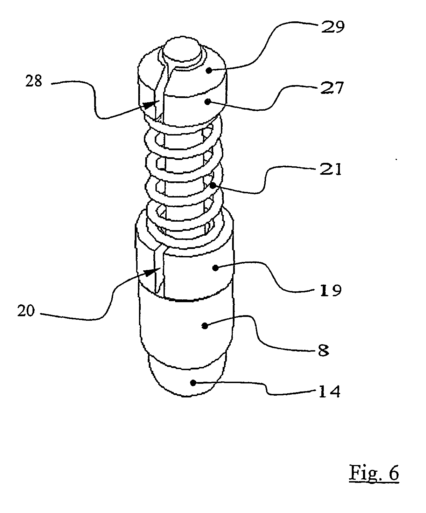

In den Figuren 5 und 6 ist eine weitere Ausführung der erfindungsgemäßen Rastiervorrichtung dargestellt, wobei neben einer ersten Zentrierung 18 eine zweite Zentriervorrichtung 26 vorgesehen ist, zwischen denen die Druckfeder 21 angeordnet ist. Die erste Zentrierung 18 entspricht der oben beschrieben Zentrierung und wird deshalb an dieser Stelle nicht weiter ausgeführt. Bei der zweiten Zentriervorrichtung 26, welche im Inneren der Ausnehmung 16 angeordnet ist, wird ebenfalls ein elastischer verformbarer Ring in der Ausgestaltung eines geschlitzten Ringes 27 mit einem durchgehenden, den Ring 27 vollständig durchtrennenden Schlitz 28, zwischen dem Stift 8 und der Halterung 7 eingesetzt. Die Druckfeder 21 wirkt dabei direkt zwischen dem geschlitzten Ring 19 der vorderen Zentriervorrichtung 18 und dem geschlitzten Ring 27 der inneren Zentriervorrichtung 26. Auf der der Druckfeder 21 abgewandten Seite weist der geschlitzte Ring 27 eine sich ins Innere der Ausnehmung verjüngende Oberfläche 29 auf, welche auch hier konisch ausgebildet ist. Diese konische Oberfläche 29 steht in Kontakt mit einer am Absatz 24 der Halterung 7 befindlichen ebenfalls konisch ausgebildeten Gegenfläche 30.

Durch die Belastung der Druckfeder 21, bei Kontakt des Stiftkopfes 14 mit der Kontaktoberfläche 12 der Kontur 9, wird der geschlitzte Ring 27 in Richtung auf die Längsachse 15 der Ausnehmung 16 zusammengedrückt und zentriert über seinen Kontakt mit dem Stift 8 diesen auf die Längsmittelachse 15. Das Vorsehen zweier Zentriervorrichtungen bietet den Vorteil, dass das Spiel zwischen dem Stift 8 und der Halterung 7 vollständig eliminiert wird und so dem Bediener des Schalthebels 3 die Schaltposition, welche durch das Rasten des Stiftkopfes 14 in die Vertiefung 13 wiedergegeben wird, exakt und ohne ein schwammiges Gefühl vermittelt wird. Auch hier ist der Aufbau sehr kompakt und klein gehalten und zeichnet sich durch eine einfache Gestaltung mit wenigen standardisierten Bauteilen aus. Insbesondere existieren außer dem notwendigerweise aus der Halterung 7 herausragenden Stiftkopf 14 keine weiteren Elemente, welche aus der Halterung 7 herausragen und die Bewegungsbahn der Halterung 7 bzw. des mit der Halterung 7 verbundenen Schalthebels 3 beeinträchtigen können.

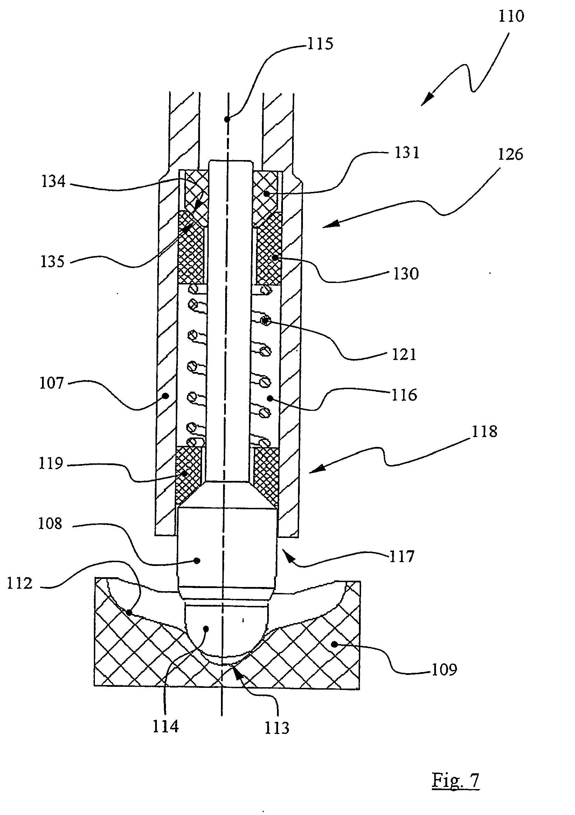

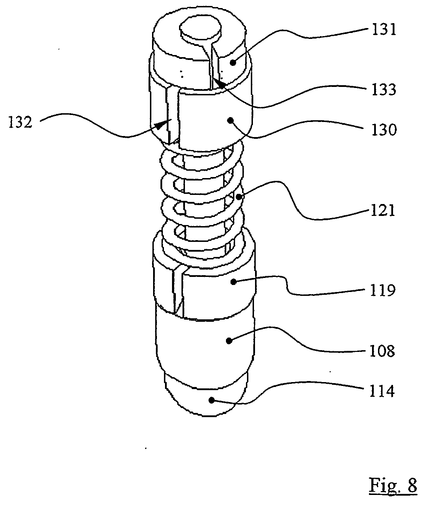

Eine weitere vorteilhafte Ausführung einer Rastiervorrichtung 110 mit zwei Zentriervorrichtungen 118 und 126 ist in den Figuren 7 und 8 dargestellt. Der Aufbau und die Wirkungsweise der Zentriervorrichtung 118 entspricht hierbei der oben beschrieben Zentriervorrichtung 18 in den Figuren 3 bis 6, so dass an dieser Stelle lediglich auf die zur Erläuterung der oberen Zentriervorrichtung 126 notwendigen Elemente der ersten Zentriervorrichtung 18 eingegangen wird.

Die zweite und im Inneren der Ausnehmung 116 angeordnete Zentriervorrichtung 126 weist zwischen dem Stift 108 und der Halterung 107 zwei elastisch verformbare Ringe, welche vorteilhafterweise ebenfalls als geschlitzte Ringe 130 und 131 mit Schlitzen 132, 133 ausgeführt sind, auf. Beide Geschlitzte Ringe 130, 131 weisen jeweils eine sich in Richtung der Längsachse 115 verjüngende Oberfläche 134, 135 auf, wobei diese Oberflächen vorteilhaft wiederum konisch ausgebildet sind und die beiden geschlitzten Ringe 130, 131 über die konischen Oberflächen 134, 135 miteinander in Kontakt stehen. Ein erster geschlitzter Ring 130 steht in unmittelbarem Kontakt mit der Druckfeder 121, wobei seine konische Oberfläche 134 eine Kegelsenkung darstellt und in Richtung der Längsachse 115 ausgerichtet ist. Der zweite geschlitzte Ring 131 steht mit seiner konischen Oberfläche 135, welche einen Kegelstumpf darstellt, mit dem ersten geschlitzten Ring 130 in Kontakt und stützt sich auf der der konischen Oberfläche 135 abgewandeten Seite über einen Absatz 124 an der Halterung 107 ab.

Bei Druckbeaufschlagung durch eine Federkraft der Druckfeder 121 gleiten die beiden geschlitzten Ringe 130, 131 über ihre konischen Oberflächen 134, 135 gegeneinander ab. Dabei weitet sich der erste geschlitzte Ring 130 und stützt sich an der Innenwandung der Ausnehmung 116 ab, wohingegen der zweite geschlitzte Ring 131 zusammengedrückt wird und in Kontakt mit dem Stift 108 steht. Hierdurch wird auf den Stift 108 eine radial gleichmäßig wirkende Kraft ausgeübt, die den Stift auf die Längsachse 115 zentriert. Diese Zentriervorrichtung 126 ist ebenfalls recht kompakt aufgebaut und mit wenigen gestalterisch einfachen Bauteilen versehen. In Zusammenwirken mit der ersten Zentriervorrichtung 118 wird hier ebenfalls eine optimale Zentrierwirkung erzielt. Die Richtung der sich verjüngenden Oberflächen 134 und 135 kann bei Bedarf auch vertauscht werden. Wenn die konische Oberfläche in der Ausbildung eines Kegelstumpfes sich am ersten geschlitzten Ring 130 befindet, liegt dieser am Stift 108 an, wohingegen der in diesem Fall mit einer konischen Oberfläche in der Ausbildung einer Kegelsenkung versehene zweite geschlitzte Ring 131 mit seinem Außenumfang an der Halterung 107 anliegen würde.

Der Einsatz zweier geschlitzte Ringe 130, 131 wie in den Figuren 7 und 8 gezeigt, bietet als zusätzlichen Vorteil, dass die Werkstoffwahl für die einzelnen Baueile weitergehend optimiert und an die einzelnen Anforderung angepasst werden kann.

So muss beispielsweise der zweite geschlitzte Ring 131 eine Gleitbewegung zwischen dem Stift 108 und diesem geschlitzten Ring 131 ermöglichen, was für den ersten geschlitzten Ring nicht in diesem Maße zutrifft.

Die zweite Zentriervorrichtung 126 kann alternativ auch als einzige Zentriervorrichtung verwendet werden. Hierbei stützt sich die Druckfeder 121 dann beispielsweise direkt an einem nicht dargestellten Absatz am Stift 108 ab.

Die Druckbeaufschlagung für den Stift 108 in der in den Figuren 7 und 8 dargestellten Ausführung erfolgt wie bei den vorherigen Ausführungen über eine Kontakt des Stiftkopfes 114 mit der Kontaktoberfläche 112 einer festsehenden Kontur 109. Die Rastiervorrichtung ist gerastet, sobald der Stiftkopf 114 in der Vertiefung 113 liegt und mittels der Druckfeder 113 in dieser gehalten wird. Für eine Verstellung des Schalthebels 3 ist dann die Überwindung der von der Druckfeder 121 ausgeübten Druckkraft erforderlich. Alternativ kann die Vertiefung auch am Stiftkopf und auf der Kontur Erhebungen vorgesehen werden. Die Rastposition wäre dann gegeben, wenn die Vertiefung des Stiftkopfes auf einer Erhebung zum liegen kommt.

Neben der in den Figuren dargestellten Ausführungsform der elastisch verformbaren Ringe als geschlitzte Ringe sind auch andere Ausführungsformen der elastisch verformbaren Ringe denkbar. So können die elastisch verformbaren Ringe auch als geschlossenen Ringe aus einem weichen, die erforderlichen Verformungen hergebenden Material, insbesondere einem Kunststoff, ausgebildet sein.

Die beschriebene Rastiervorrichtung ist nicht nur auf die Verwendung in einer Schaltvorrichtung beschränkt, sondern kann überall dort eingesetzt werden, wo das Spiel eines Rastierstiftes ausgeglichen werden soll, beispielsweise auch in Lenkstockhebeln, wie Blinker- und/oder Scheibenwischerhebeln.

### Bezugszeichenliste

- 1: Schaltvorrichtung
- 2: Schaltgehäuse
- 3: Schalthebel
- 4: Schwenkgelenk
- 5: erste Schwenkachse
- 6: zweite Schwenkachse
- 7: Halterung
- 8: Stift
- 9: Kontur
- 10: Rastiervorrichtung
- 11: Führungsnut
- 12: Kontaktoberfläche
- 13: Vertiefung
- 14: Stiftkopf
- 15: Längsachse
- 16: Ausnehmung
- 17: Öffnung
- 18: Zentriervorrichtung
- 19: geschlitzter Ring
- 20: Schlitz
- 21: Druckfeder
- 22: konische Oberfläche
- 23: konische Oberfläche
- 24: Absatz
- 25: verjüngter Bereich der Ausnehmung
- 26: zweite Zentrierung
- 27: geschlitzter Ring
- 28: Schlitz
- 29: konische Oberfläche
- 30: konische Oberfläche
- 107: Halterung
- 108: Stift
- 109: Kontur
- 110: Rastiervorrichtung
- 112: Kontaktoberfläche
- 113: Vertiefung
- 114: Stiftkopf
- 115: Längsachse
- 116: Ausnehmung
- 117: erste Zentriervorrichtung
- 118: zweite Zentriervorrichtung
- 119: geschlitzter Ring
- 121: Druckfeder
- 124: Absatz
- 130: geschlitzter Ring
- 131: geschlitzter Ring
- 132: Schlitz
- 133: Schlitz
- 134: Konische Oberfläche
- 135: Konische Oberfläche

## Patentansprüche

1. Rastiervorrichtung (10), umfassend
- eine verstellbare, mit einer Ausnehmung (16) versehene, Halterung (7),
- eine feststehende Kontur (9) mit einer Kontaktoberfläche (12),
- einen in der Ausnehmung (16) beweglich angeordneten, mit einer mittels einer Druckfeder (21) erzeugten axialen Federkraft beaufschlagten Stift (8), mit einem Stiftkopf (14), der aus der Ausnehmung (16) der Halterung (7) herausragt und eine Kontaktpaarung mit der Kontaktoberfläche (12) aufweist,
- zumindest eine Zentriervorrichtung (18) zwischen dem Stift (8) und der Halterung (7),
wobei
die zumindest eine Zentriervorrichtung (18) zumindest einen Ring (19) aufweist, welcher
- zwischen dem Stift (8) und der Halterung (7) innerhalb der Ausnehmung (16) angeordnet ist,
- innerhalb der Ausnehmung (16) verschiebbar angeordnet ist,
- eine Oberfläche (22) mit einem sich entgegen der Kraftrichtung der Druckfeder (21) verjüngenden Querschnitt aufweist,
**dadurch gekennzeichnet, dass** der Ring (19) elastisch verformbar ist und dass die Oberfläche (22) mit einer komplementären Oberfläche (23) am Stift (8) in Kontakt steht.

2. Rastiervorrichtung (110); umfassend
- eine verstellbare, mit einer Ausnehmung (116) versehene, Halterung (107),
- eine feststehende Kontur (109) mit einer zumindest eine Vertiefung (113) aufweisende Kontaktoberfläche (112),
- einen in der Ausnehmung (116) beweglich angeordneten, mit einer mittels einer Druckfeder (121) erzeugten axialen Federkraft beaufschlagten Stift (108), wobei der Stiftkopf (114) aus der Ausnehmung (116) der Halterung (107) herausragt und eine Kontaktpaarung mit der Kontaktoberfläche (112) aufweist,
- zumindest eine Zentriervorrichtung (126) zwischen dem Stift (108) und der Halterung (107),
**dadurch gekennzeichnet, dass**
die Zentriervorrichtung (126) mittels zweier elastisch verformbarer Ringe (130; 131) erfolgt, welche
- zwischen dem Stift (108) und der Halterung (107) innerhalb der Ausnehmung (116) angeordnet sind und,
- jeweils eine sich in Längsachsenrichtung der Ausnehmung (116) verjüngende Oberfläche (134; 135) aufweisen, wobei die elastisch verformbaren Ringe (130; 131) über ihren sich verjüngenden Oberflächen (134;135) miteinander in Kontakt stehen.

3. Rastiervorrichtung nach Anspruch 1 oder 2,
**dadurch gekennzeichnet, dass**
der zumindest eine oder die elastisch verformbaren Ringe (19; 27; 130; 131) jeweils zumindest einen Schlitz (20; 28; 132; 133) aufweisen, der axial oder schräg zur Längsachse (15; 115) des Stiftes (8; 108) und/oder der Ausnehmung (16; 116) angeordnet ist und den Ring (19; 27; 130; 131) vollständig oder teilweise durchtrennt.

4. Rastiervorrichtung nach einem der vorherigen Ansprüche,
**dadurch gekennzeichnet, dass**
die sich verjüngende Oberfläche (22; 29; 134; 135) des oder der elastisch verformbaren Ringe (19; 27; 130; 131) konisch ausgebildet ist.

5. Rastiervorrichtung nach einem der Ansprüche 2 bis 4,
**dadurch gekennzeichnet, dass**
ein erster elastisch verformbarer Ring (130) mit seiner dem ersten Ring (130) abgewandten Seite mit der Druckfeder (121) in Kontakt steht und dass ein zweiter elastisch verformbarer Ring (131) mit seiner flachen Stirnseite an der Halterung (107) abgestützt ist

6. Rastiervorrichtung nach einem der Ansprüche 2 bis 5,
**dadurch gekennzeichnet, dass**
die Druckfeder (121) an der dem geschlitzten Ring (130) abgewandten Seite an dem Stift (108) anliegt.

7. Rastiervorrichtung nach Anspruch 1 oder 2,
**dadurch gekennzeichnet, dass**
die Druckfeder (21; 121) an der dem geschlitzten Ring abgewandten Seite an der Halterung (7; 107) anliegt.

8. Rastiervorrichtung nach Anspruch 1 oder 2,
**dadurch gekennzeichnet, dass**
die Rastiervorrichtung (10; 110) zwei von einander beabstandete Zentriervorrichtungen (18; 26) (118;126) aufweist, welche über eine Druckfeder (21; 121) miteinander in Wirkverbindung stehen.

9. Rastiervorrichtung nach Anspruch 8,
**dadurch gekennzeichnet, dass**
eine erste Zentriervorrichtung (18; 118) in Nähe der Öffnung (17; 117) der Ausnehmung (16; 116) und eine zweite Zentriervorrichtung (26; 126)im Inneren der Ausnehmung (16; 116) angeordnet ist.

10. Rastiervorrichtung nach einem der Ansprüche 8 bis 9,
**dadurch gekennzeichnet, dass**
die erste Zentriervorrichtung (118) mittels eines elastisch verformbaren Ringes (119) erfolgt, welcher
- zwischen dem Stift (108) und der Halterung (107) innerhalb der Ausnehmung (116) angeordnet ist
- innerhalb der Ausnehmung (116) verschiebbar angeordnet ist
- eine Oberfläche (122) mit einem sich entgegen der Druckfeder (121) verjüngenden Querschnitt aufweist, welche mit einer komplementären Oberfläche (123) am Stift (108) in Kontakt steht, und.
die zweite Zentriervorrichtung (126) mittels zweier elastisch verformbarer Ringe (130; 131) erfolgt, welche
- zwischen dem Stift (108) und der Halterung (107) innerhalb der Ausnehmung (116) angeordnet sind und
- jeweils eine sich in Längsachsenrichtung der Ausnehmung (116) verjüngende Oberfläche (134; 135) aufweisen, wobei die elastisch verformbaren Ringe (130; 131) über ihren sich verjüngenden Oberflächen (134; 135) miteinander in Kontakt stehen.

## Claims

1. Locking device (10), comprising
- an adjustable holder (7) provided with a recess (16),
- a stationary contour (9) with a contact surface (12),
- a pin (8) which is disposed in a mobile manner in the recess (16) and is subjected to an axial spring force produced by means of a compression spring (21), with a pinhead (14) which projects out of the recess (16) of the holder (7) and has a contact pairing with the contact surface (12),
- at least one centring device (18) between the pin (8) and the holder (7),
wherein
the at least one centring device (18) comprises at least one ring (19) which
- is disposed between the pin (8) and the holder (7) inside the recess (16),
- is disposed such that it can be displaced inside the recess (16),
- comprises a surface (22) with a cross section which tapers against the direction of force of the compression spring (21),
**characterised in that**
the ring (19) is elastically deformable, and that the surface (22) is in contact with a complementary surface (23) on the pin (8).

2. Locking device (110), comprising
- an adjustable holder (107) provided with a recess (116),
- a stationary contour (109) with a contact surface (112) comprising at least one depression (113),
- a pin (108) which is disposed in a mobile manner in the recess (116) and is subjected to an axial spring force produced by means of a compression spring (121), wherein the pinhead (114) projects out of the recess (116) of the holder (107) and has a contact pairing with the contact surface (112),
- at least one centring device (126) between the pin (108) and the holder (107),
**characterised in that**
the centring device (126) is implemented by means of two elastically deformable rings (130; 131) which
- are disposed between the pin (108) and the holder (107) inside the recess (116) and
- in each case comprise a surface (134; 135) which tapers in the longitudinal axial direction of the recess (116), wherein the elastically deformable rings (130; 131) are in contact with one another via their tapering surfaces (134; 135).

3. Locking device according to Claim 1 or 2,
**characterised in that**
the at least one or the elastically deformable ring(s) (19; 27; 130; 131) in each case comprise(s) at least one slot (20; 28; 132; 133) which is disposed axially or obliquely relative to the longitudinal axis (15; 115) of the pin (8; 108) and/or of the recess (16; 116) and completely or partly severs the ring (19; 27; 130; 131).

4. Locking device according to any one of the preceding Claims,
**characterised in that**
the tapering surface (22; 29; 134; 135) of the elastically deformable ring or rings (19; 27; 130; 131) is of conical formation.

5. Locking device according to any one of Claims 2 to 4,
**characterised in that**
a first elastically deformable ring (130) is in contact with the compression spring (121) by way of its side which is remote from the first ring (130), and that a second elastically deformable ring (131) is supported at the holder (107) by way of its flat front side.

6. Locking device according to any one of Claims 2 to 5,
**characterised in that**
the compression spring (121) lies against the pin (108) on the side which is remote from the slotted ring (130).

7. Locking device according to Claim 1 or 2,
**characterised in that**
the compression spring (21; 121) lies against the holder (7; 107) on the side which is remote from the slotted ring.

8. Locking device according to Claim 1 or 2,
**characterised in that**
the locking device (10; 110) comprises two spaced centring devices (18; 26) (118; 126) which are actively connected together via a compression spring (21; 121).

9. Locking device according to Claim 8,
**characterised in that**
a first centring device (18; 118) is disposed in the vicinity of the opening (17; 117) of the recess (16; 116) and a second centring device (26; 126) in the interior of the recess (16; 116).

10. Locking device according to any one of Claims 8 to 9,
**characterised in that**
the first centring device (18; 118) is implemented by means of an elastically deformable ring (119) which
- is disposed between the pin (108) and the holder (107) inside the recess (116),
- is disposed such that it can be displaced inside the recess (116),
- comprises a surface (122) with a cross section which tapers against the compression spring (121), which surface is in contact with a complementary surface (123) on the pin (108), and
the second centring device (126) is implemented by means of two elastically deformable rings (130; 131) which
- are disposed between the pin (108) and the holder (107) inside the recess (116) and
- in each case comprise a surface (134; 135) which tapers in the longitudinal axial direction of the recess (116), wherein the elastically deformable rings (130; 131) are in contact with one another via their tapering surfaces (134; 135).

## Revendications

1. Dispositif de verrouillage (10) comprenant
- un support (7) réglable pourvu d'un évidement (16),
- un contour (9) fixe avec une surface de contact (12),
- une broche (8) disposée déplaçable dans l'évidement (16), soumise à une force de ressort axiale produite au moyen d'un ressort de pression (21), avec une tête de broche (14) qui dépasse de l'évidement (16) du support (7) et comporte une paire de contacts avec la surface de contact (12),
- au moins un dispositif de centrage (18) entre la broche (8) et le support (7),
dans lequel
le au moins un dispositif de centrage (18) comporte au moins un anneau (19) qui
- est disposé entre la broche (8) et le support (7) à l'intérieur de l'évidement (16),
- est disposé coulissant à l'intérieur de l'évidement (16),
- présente une surface (22) avec une section transversale se rétrécissant dans le sens contraire au sens de la force du ressort de pression (21),
**caractérisé en ce que** l'anneau (19) est déformable élastiquement et **en ce que** la surface (22) est en contact avec une surface (28) complémentaire de la broche (8).

2. Dispositif de verrouillage (110) comprenant :
- un support (107) réglable, pourvu d'un évidement (116),
- un contour fixe (109) avec une surface de contact (112) présentant au moins un renfoncement (113),
- une broche (108) disposée déplaçable dans l'évidement (116), soumise à une force de ressort axiale produite au moyen d'un ressort de pression (121), la tête de broche (114) dépassant de l'évidement (116) du support (107), et présentant une paire de contacts avec la surface de contact (112),
- au moins un dispositif de centrage (126) entre la broche (108) et le support (107),
**caractérisé en ce que**
le dispositif de centrage (126) est assuré au moyen de deux anneaux (130 ; 131) déformables élastiquement qui
- sont disposés entre la broche (108) et le support (107) à l'intérieur de l'évidement (116) et
- présentent chacun une surface (134 ; 135) se rétrécissant dans la direction de l'axe longitudinal de l'évidement (116), les anneaux (130 ; 131) déformables élastiquement étant en contact entre eux par leurs surfaces (134 ; 135) se rétrécissant.

3. Dispositif de verrouillage selon la revendication 1 ou 2,
**caractérisé en ce que**
le au moins ou les anneaux élastiquement déformables (19 ; 27 ; 130 ; 131) présentent chacun au moins une fente (20 ; 28 ; 132 ; 133) qui est disposée axialement ou obliquement par rapport à l'axe longitudinal (15 ; 115) de la broche (8 ; 108) et/ou de l'évidement (16 ; 116), et sépare entièrement ou en partie l'anneau (19 ; 27 ; 130 ; 131).

4. Dispositif de verrouillage selon l'une des revendications précédentes,
**caractérisé en ce que**
la surface (22 ; 29; 134; 135) se rétrécissant du ou des anneaux élastiquement déformables (19 ; 27 ; 130 ; 131) est réalisée conique.

5. Dispositif de verrouillage selon l'une des revendications 2 à 4,
**caractérisé en ce que**
un premier anneau élastiquement déformable (130) est en contact par son côté tourné à l'opposé du premier anneau (130), avec le ressort de pression (121), et **en ce qu'**un deuxième anneau élastiquement déformable (131) est soutenu par son côté frontal plat contre le support (107).

6. Dispositif de verrouillage selon l'une des revendications 2 à 5,
**caractérisé en ce que**
le ressort de pression (121) s'applique contre le côté tourné à l'opposé de l'anneau fendu (130), contre la broche (108).

7. Dispositif de verrouillage selon la revendication 1 ou 2,
**caractérisé en ce que**
le ressort de pression (21 ; 121) s'applique contre le support (7 ; 107) du côté tourné à l'opposé de l'anneau fendu.

8. Dispositif de verrouillage selon la revendication 1 ou 2,
**caractérisé en ce que**
le dispositif de verrouillage (10 ; 110) comporte deux dispositifs de centrage (18 ; 26, 118 ; 126) écartés l'un de l'autre, qui sont en liaison active entre eux par l'intermédiaire d'un ressort de pression (21 ; 121).

9. Dispositif de verrouillage selon la revendication 8,
**caractérisé en ce que**
un premier dispositif de centrage (18 ; 118) est disposé à proximité de l'ouverture (17 ; 117) de l'évidement (16 ; 116) et un second dispositif de centrage (26 ; 126) est disposé à l'intérieur de l'évidement (16 ; 116).

10. Dispositif de verrouillage selon l'une des revendications 8 ou 9,
**caractérisé en ce que**
le premier dispositif de centrage (118) est assuré au moyen d'un anneau élastiquement déformable (119) qui
- est disposé entre la broche (108) et le support (107) à l'intérieur de l'évidement (116),
- est disposé coulissant à l'intérieur de l'évidement (116),
- présente une surface (122) avec une section transversale se rétrécissant à l'encontre du ressort de pression (121), qui est en contact avec une surface (123) complémentaire de la broche (108), et
le second dispositif de centrage (126) est assuré au moyen de deux anneaux élastiquement déformables (130 ; 131) qui
- sont disposés entre la broche (108) et le support (107) à l'intérieur de l'évidement (116) et
- présentent chacun une surface (134 ; 135) se rétrécissant dans la direction de l'axe longitudinal de l'évidement (116), les anneaux élastiquement déformables (130; 131) étant en contact entre eux par leurs surfaces (134 ; 135) se rétrécissant.
